# EUROPEAN PATENT SPECIFICATION

(11) **EP 2 687 142 B1**
(45) Date of publication and mention of the grant of the patent: **18.03.2015**
(21) Application number: 13176336.9
(22) Date of filing: 12.07.2013
(51) Int. Cl.: A47L 15/42, A47L 15/48, A47L 15/00

(54) **Household dish-washing machine**
Haushaltsgeschirrspülmaschine
Lave-vaisselle à usage ménager

(30) Priority: 20.07.2012 IT TO20120640; 20.07.2012 IT TO20120639
(43) Date of publication of application: 22.01.2014
(60) Divisional application: 14184902.6
(73) Proprietor: Indesit Company S.p.A., 60044 Fabriano (AN) (IT)
(72) Inventor: Bongini, Dino, 60044 Fabriano (AN) (IT)
(74) Representative: Gallarotti, Franco

(56) References cited:
- EP-A2- 1 055 389
- EP-A2- 2 108 299
- WO-A1-2006/063895
- WO-A1-2010/120657
- DE-A1- 10 122 927
- GB-A- 2 271 503
- US-A1- 2009 277 482
- US-A1- 2011 290 284

## Description

### Field of the invention

The present invention relates to a household dish-washing machine and to a corresponding method for the treatment of dishes.

### Prior art

Modem dish washers comprise a wash tub, extractably housed within which are at least two dish racks in positions set on top of one another and at least two sprinklers, which are usually located one underneath the lower rack and the other underneath the upper rack. Dish washers with limited loading capacity usually comprise a single dish rack and a single sprinkler member.

During normal operation of a dish washer, the water is charged from the water mains supply into the wash tub so as to gather on its bottom. The bottom of the wash tub typically includes a collecting sump, usually provided with a water-filtering system. A wash pump takes the water gathered in the sump and sends it to the sprinklers. The water comes out of the nozzles of the sprinklers and impinges with relative force upon the dishes contained in the corresponding racks in order to treat them. To carry out some phases of treatment of the dishes, for example a washing phase or a hot-rinsing phase, the water must be heated to a certain temperature established by the operating program, indicatively comprised between 45°C and 75°C according to the various phases. Heating is obtained by way of one or more electrical resistances. Some operating programs also include cold-treatment phases, typically represented by a first rinsing operation.

Modem dish washers are increasingly devised for guaranteeing a high quality of the process of treatment and efficient exploitation of the energy and water resources, and for this purpose some dish washers are provided with auxiliary functional systems. A type of auxiliary system used on some machines is represented by a system for ventilation or forced drying of the dishes, which generally includes a condensation device external to the wash tub, set up against a stationary wall thereof, or else positioned within the door of the machine. In these machines, the overall quality of the treatment is increased in so far as, at the end of an operating cycle of the machine, the dishes are practically completely dry and ready to be used again or to be put away. Another example of auxiliary system is represented by a liquid-storage system, based upon the use of a container external to the wash tub and set up against a stationary wall thereof. In some machines the storage tank is provided with a view to obtaining, within at least a hot phase of a treatment cycle, a partial heating of water to be used in a subsequent phase of the same cycle, exploiting the heat exchange that is obtained between a wall of the wash tub and the tank set up against it.

Production of dish washer machines equipped with one or more auxiliary systems of the type referred to is generally complex, in particular when the machine must be provided with both of the systems referred to above.

EP 2108299 A2 discloses a dish-washing machine and a method for drying dishes according to the preambles of claims 1 and 15.

### Object and summary of the invention

In view of what has been set forth above, in accordance with a first aspect the present invention has the aim of providing a dish-washing machine of the type including a liquid-storage system and a drying system, which is simple and inexpensive to produce and which present reliable operation and increased efficiency. Such aim is achieved by a dish-washing machine and by a method for drying dishes having the characteristics specified in Claim 1 and Claim 15, respectively.

Preferred characteristics of the invention are specified in the dependent claims. The claims form an integral part of the technical teaching provided herein in relation to the invention.

### Brief description of the drawings

Further objects, characteristics, and advantages of the present invention will emerge clearly from the ensuing description, with reference to the annexed drawings, which are provided purely by way of non-limiting example and in which:
- Figure 1 is a schematic perspective view of some components of the load-bearing structure of a dish-washing machine according to the invention;
- Figure 2 is a schematic cross-sectional view of a possible embodiment of a collecting sump of a machine according to the invention, with a corresponding system of filters;
- Figure 3 is a simplified diagram of a possible water circuit of a machine according to the invention;
- Figure 4 is a schematic perspective view of a first valve device used in a machine according to a possible embodiment of the invention;
- Figure 5 is a schematic perspective view of a second valve device used in a machine according to a possible embodiment of the invention;
- Figure 6 is a schematic top plan view of a possible arrangement of components within a base of a machine according to the invention;
- Figure 7 is a schematic perspective view of a possible embodiment of a heat exchanger of a machine according to the invention;
- Figure 8 is a schematic cross-sectional view, according to a vertical plane, of the heat exchanger of Figure 7;
- Figures 9 and 10 are perspective views of two different hollow composable elements forming part of the heat exchanger of Figure 7;
- Figure 11 is a side elevation of the composable element of Figure 9;
- Figure 12 is a schematic top plan view of the heat exchanger of Figure 7, with a top part removed;
- Figure 13 is a partial, schematic, cross-sectional view, according to a horizontal plane, of the heat exchanger of Figure 7;
- Figure 14 is a schematic cross-sectional view in side elevation of the heat exchanger of Figure 7; and
- Figures 15 and 16 are simplified diagrams similar to that of Figure 3, regarding possible variants of the invention.

### Description of preferred embodiments of the invention

Reference to "an embodiment" or "one embodiment" within the framework of the present description is intended to indicate that a particular configuration, structure, or characteristic described in relation to the embodiment is comprised in at least one embodiment. Hence, phrases such as "in an embodiment" or "in one embodiment" and the like that may be present in various points of the present description do not necessarily all refer to one and the same embodiment. Moreover, the particular configurations, structures, or characteristics may be combined in any adequate way in one or more embodiments. The references used in what follows are merely provided for convenience and do not define the sphere of protection or the scope of the embodiments.

It is moreover pointed out that in the sequel of the present description only the elements useful for an understanding of the invention will be described, taking for granted that the machine according to the invention comprises all the elements in themselves known for operation of a dish washer, including a possible external cabinet thereof, a user interface, a control system, level-sensor means, a resistance for heating the water, a dispenser of washing agents, etc.

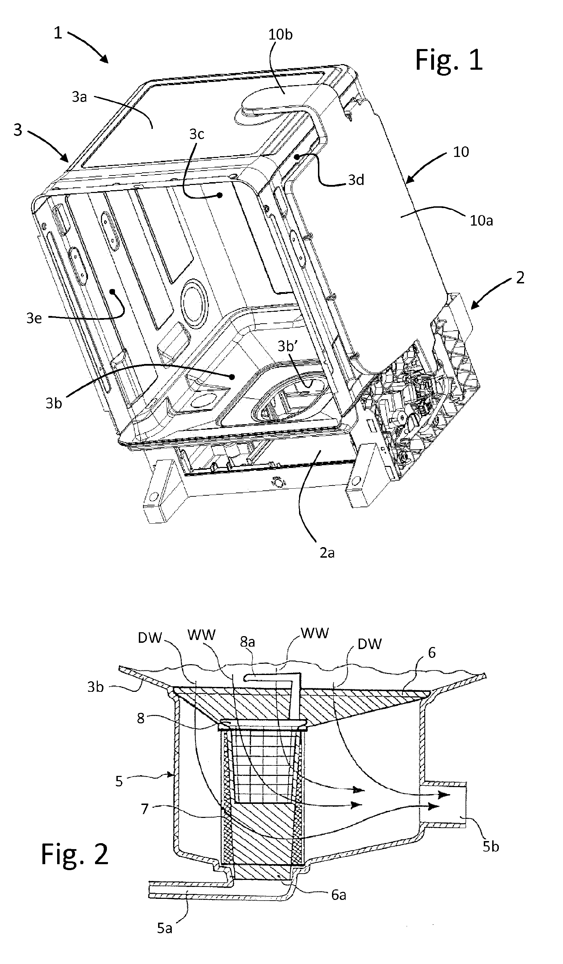

Represented schematically in Figure 1 is a dish-washing machine for household use according to a possible embodiment of the present invention. The machine 1 is illustrated limitedly to the parts of immediate interest for an understanding of the present invention.

The machine 1 has a structure that comprises a base 2 and a wash tub 3 supported by the base 2. The base 2, made for example of injection-moulded thermoplastic material, preferably has open side walls and defines a housing space 2a, positioned within which are various functional components of the machine 1, amongst which a wash pump, a drain pump, part of a water-collecting sump, and a water-softening device (if envisaged), the aforesaid elements not being represented in the figures for requirements of greater clarity of representation. The wash tub 3, of a conception as a whole known, comprises an upper wall 3a, a bottom wall 3b, and four side walls. Visible in the figures are only the stationary side walls of the tub 3, i.e., the rear wall 3c, and the right-hand and left-hand walls, designated by 3d and 3e, respectively; the fourth side wall of the tub 3, i.e., its front wall, is constituted by an internal shell of the door of the machine (here not represented), the so-called "counter-door".

It should be noted that the term "base" is meant to designate any structure designed to keep at least the bottom wall 3b of the tub raised off the floor, thus determining the presence of a housing space 2a: in this perspective, then, the base 2 could include simply a plurality of legs or upright elements that support the bottom wall 3b from beneath.

The machine 1 preferably has dimensions typical of machines for household use currently on the market, and hence with a width and depth comprised between 55 and 60 cm and with a height comprised between 80 and 85 cm.

From Figure 1 it may be seen how the bottom wall 3b of the tub defines a central opening 3b', mounted at which is the already cited collecting sump, integrating a water-filtering system. This sump, with an example of possible filtering system (for instance, of the type known from the document No. FR-A-2503557) is represented schematically in Figure 2.

Visible in the above figure is the bottom wall 3b of the tub, fixed in a fluid-tight way to which (at the opening 3b' of Figure 1) is the sump, designated as a whole by 5. Located in the lowest part of the sump is a discharge outlet 5a, for connection to the intake branch of a drain pump (not represented); defined in the side wall of the sump 5 is a second outlet 5b for connection to the intake branch of a washing or recirculation pump (not represented either).

The sump 5 is covered at the top by a first, fine, filter 6, generally of a funnel type and relatively wide in its top part. This filter 6 proceeds in a downward direction, within the sump 5, with a generally sleeve-like part 6a. In the example represented, the sleeve-like part 6a extends substantially as far as the mouth of the outlet 5a for the drain pump. The sleeve-like part 6a of the filter 6 is surrounded by a tubular filter 7 with a very fine mesh, and in any case finer than that of the filter 6, of the type known as "micro filter". As is known, the microfilter 7 extends from beneath upwards, i.e., from the upper part of the filter 6 as far as into the vicinity of the outlet 5a, forming therewith a cylindrical filtering surface that encloses the sleeve-like part 6a of the filter 6. Finally, in the case illustrated by way of example, in the sleeve-like part 6a of the filter 6 there is inserted from above, in a removable way, a filter with coarse mesh, designated by 8, which is cup-shaped and equipped with a handle 8a.

When just the wash pump is functioning, for example in the course of a washing phase in the strict sense, the water is sucked towards the outlet 5b, in the direction indicated by the arrows of Figure 2. Part of this water follows the path represented schematically by the arrows DW, i.e., through the fine filter 6, which withholds the parts of macroscopic and fine dirt present in the water. The parts of dirt are then transferred towards the sleeve-like part 6a of the filter 6: the smaller parts of dirt deposit in the area of the outlet 5a, whereas the larger parts of dirt that could cause clogging of the drain pump (consider, for example, a small bone) are withheld by the filter with coarse mesh 8. Another part of the washing water is directed towards the central area of the filter 6, according to the path represented schematically by the arrows WW, and traverses the coarse-meshed filter 8, the sleeve-like part 6a of the filter 6, and the microfilter 7: in this way, then, the larger particles of dirt are withheld by the coarse-meshed filter 8, the small particles of dirt by the sleeve-like part 6a, and the very small particles of dirt by the microfilter 7. The result of this filtering action, obtained via a plurality of filters with different meshes, makes it possible to direct towards the wash pump, and hence towards the dishes being treated, water that tends to be clean, or in any case water from which the majority of the particles of dirt have been removed.

When, instead, the washing water has to be discharged from the tub, just the drain pump is rendered active, with the entire volume of water that is sucked towards the outlet 5a. Part of the water sucked towards the outlet 5a brings about detachment of the very small particles of dirt that have possibly remained on the inside of the cylindrical wall of the microfilter 7 and of the small particles of dirt that have remained on the inside of the sleeve-like part 6a. Another part of the water sucked in removes the fine particles of dirt withheld on the top part of the filter 6 through the bottom of the coarse-meshed filter 8, which in any case withholds the larger particles of dirt. As has been said, the filter 8 is removable and can hence be removed periodically for cleaning purposes.

In an embodiment, the machine 1 is provided with a drying circuit. In the example represented, the drying circuit is of a substantially closed type, and includes a hollow body, designated as a whole by 10, with a vertical portion 10a that is generally set parallel to the side wall 3d of the tub and an upper horizontal portion 10b that is generally set parallel to the upper wall 3a of the tub. The portion 10b defines an air inlet that is coupled, for example with interposition of a fan, to an opening of the upper wall 3a, whereas the portion 10a is in fluid communication with the inside of the tub 3, via a container described hereinafter. The drying circuit preferably includes at least one fan, as in the case represented (reference 50), operative for forced intake of humid air within the tub 3, via the aforesaid opening present in the upper wall 3a. The configuration illustrated of the hollow body 10, albeit preferred, serves purely as an example, it possibly having a shape different from the one represented (for example, including just the portion 10a, provided, in an upper area thereof, with an inlet in communication with the inside of the tub 3).

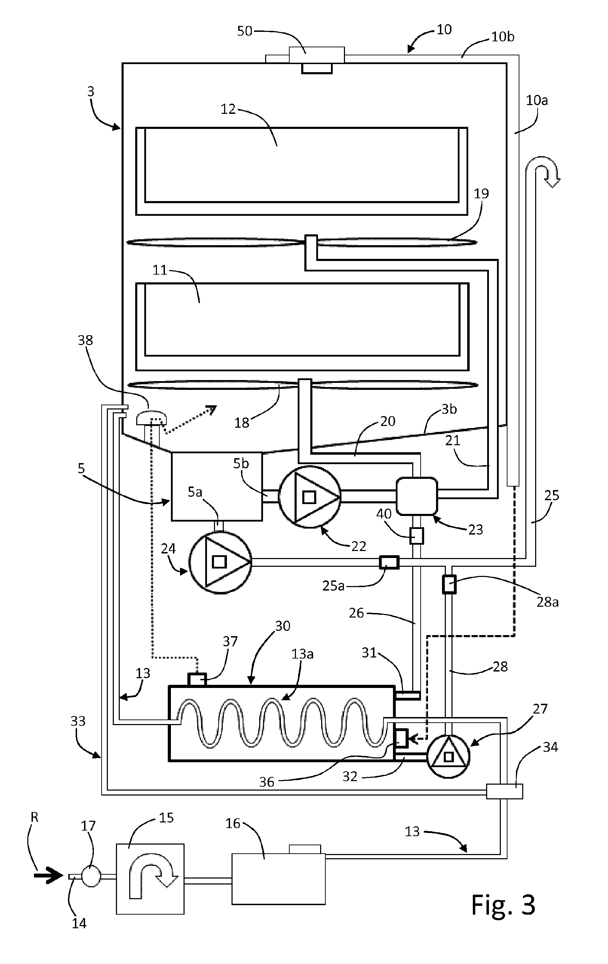

Represented in Figure 3 is a simplified diagram of the water circuit of the machine 1, limitedly to the components useful for an understanding of the invention. In the case exemplified, provided inside the tub 3 are at least one lower rack 11 and one upper rack 12, that are to contain respective loads of dishes. The racks 11 and 12 are mounted - in a way in itself known - so that they can be pulled out and/or removed through a front opening of the tub 3. The invention may in any case also be applied to machines provided with a single rack, or also to machines provided with more than two racks. The structure of the machine includes a front door (not represented), the inside of which provides a wall for closing the front opening of the tub 3.

The machine 1 has charging means, for charging the tub 3 with water from a domestic mains supply R. In the non-limiting example illustrated, these means include a first duct 13 for supply of the tub 3 with water, the inlet of which is connected to a connection 14 for connection to the water mains supply R. Provided along the first duct 13 are an air-break device and a water-softening device, of a conception known and designated, respectively, by 15 and 16. Between the connection 14 and the air-break device 15, provided on the duct 13 are valve means 17, such as a solenoid valve, controlled by a control system of the machine (not represented). A solenoid valve of this sort is not necessarily installed inside the machine 1, it possibly belonging to a known anti-flooding safety device (generically known as "aquastop") to be installed upstream of the connection 14.

The charging means are configured for charging the tub 3 with a substantially predetermined amount of water, this amount possibly varying according to the type of treatment program and/or according to the operating step of a treatment program. For the above purpose, the charging means preferably include dosing means of a type in itself known (not represented), such as a level sensor, a two-level pressure switch, or else an impeller-type volume meter. The functions of the dosing means may also be performed, according to a technique in itself known, via analysis of electrical quantities linked to operation of a wash pump.

The machine 1 has a sprinkler system, which includes at least one first sprinkling member 18, for sprinkling with water the dishes contained in a corresponding rack, here the rack 11. In the case represented, since the machine has two racks, the sprinkler system also includes a second sprinkling member 19, for sprinkling the dishes contained in the rack 12 with water. The invention may in any case also be applied to machines provided with a single sprinkling member or also to machines provided with more than two sprinkling members. Preferentially, the sprinkling members 18 and 19 are rotary sprinklers, of a conception in itself known. In the example represented, the water circuit of the machine includes two ducts, designated by 20 and 21, for supplying the sprinkler 18 and the sprinkler 19, respectively.

Designated by 22 is a wash or recirculation pump, i.e., a pump driven by an electric motor, for example a centrifugal pump, having an intake section, which is in fluid communication with the outlet 5b of the sump 5 (Figure 2) and a delivery section, which is in fluid communication with the inlets of the ducts 20 and 21. In the embodiment of Figure 3, operatively set between the delivery section of the pump 22 and the inlets of the ducts 20 and 21 are valve means 23. The valve means 23, which are controlled by the control system of the machine 1, are switchable at least between a first condition, where the delivery section of the pump 22 is in fluid communication with the sprinklers 18 and 19, via the corresponding ducts 20 and 21, and a second condition, where the delivery section of the pump 22 is in fluid communication with just one of the sprinklers, for example the sprinkler 18, via the duct 20.

The valve means 23 may comprise two solenoid valves, each at the inlet of the respective duct 20 and 21, or else operative along the respective duct 20 and 21. In a preferred embodiment, the valve means 23 are constituted by a device for alternate supply of the sprinklers. Devices of this type are generally known (see, for example, DE-A-3904359 or DE-A-10000772) and normally provided on some dish washers in order to enable execution of treatment programs on the contents of just one of a pair of racks, for example in the case of a reduced load of dishes, or else for execution of treatment programs with alternating supply of a pair of sprinkling members, once again according to a technique in itself known.

In what follows, and where not otherwise specified, it will be assumed that the means 23 are constituted by an aforesaid device for alternate liquid supply, having an open/close element or internal distributor which can assume at least a first position, for opening both of the ducts 20 and 21, and a second position, for opening the duct 20 and closing the duct 21. The distributor member may also possibly be designed to assume a third position, for opening the duct 21 and closing the duct 20.

Once again visible in Figure 3 is the sump 5, which has the outlet 5b in fluid communication with the intake section of the pump 22. As has been said, the sump 5 is of a conception generally known, as is the corresponding filtering system (see Figure 2). The bottom outlet 5a of the sump 5 is connected to the intake branch of a drain pump 24, the delivery branch of which is connected to a drain duct 25.

In the practical embodiment of the machine 1, the sump 5 projects into the base 2, or into the housing space 2a, where there are moreover positioned the pumps 22, 24, the valve means 23, and the water-softening device 16 (if envisaged). The air-break device 15 may, instead, as is customary, be set up against one of the side walls of the tub 3.

As in the known technique, in order to perform a step of treatment of the dishes, such as a washing step or a rinsing step, the water charged into the tub 3 reaches the bottom 3b and converges towards the sump 5. The water is sucked in from the sump 5 via the pump 22, which forces the water into the ducts 20 and/or 21, for supplying the sprinklers 18 and/or 19. The water at outlet from the sprinklers 18 and/or 19 impinges upon the dishes contained in the racks 11 and/or 12, and drops on the bottom 3b, and then returns to the sump 5 and - after prior filtering - is sent back into circulation by the pump 22. At the end of the treatment step, the water present in the sump 5 and/or on the bottom 3b of the tub is emptied out of the machine 1, via the drain pump 24 and the corresponding duct 25, connected to a sewage system.

The machine 1 further comprises heating means, for heating the water charged into the tub. Also these means may be of any known type. The heating means preferentially include at least one electrical resistance, electrical supply of which is controlled by the control system of the machine 1. The resistance may, for example, be integrated in the pump 22, for instance at its delivery section. In addition or as an alternative, an electrical resistance may be housed in the sump 5, or else mounted adjacent to the bottom of the tub 3b or in the intake branch to the pump 22, in a position such as to be immersed in the water in the course or at the end of a step of charging of the tub with water, once again according to a technique in itself known.

The heating system may moreover include sensor means for detecting the temperature of the water, in signal communication with the control system of the machine, of any type known in the sector. Heating of the water may also be programmed for a given time, i.e., with the resistance that is activated for a pre-set time (in this case, the temperature-sensing means could possibly be omitted, if not required for normative and/or safety reasons).

The control system of the machine (not represented), is preferably of a type that uses an electronic microprocessor, which comprises, or operatively associated to which are, memory means. As per the prior art, the control system is configured for supervising overall operation of the machine 1, and hence for executing the treatment program or programs that the machine can handle. Preferably, contained in the memory means of the control system are the data necessary for execution of a plurality of possible treatment programs, and the system includes control means, such as a control panel or user interface, provided with means for selecting a program from among the ones available and starting execution thereof.

One or more treatment programs that can be handled by the machine in general comprise a number of operating phases that are carried out using water, for example one or more washing phases and one or more rinsing phases. One or more of these phases carried out using water may in turn include a charging step, at least one heating step, at least one treatment step, and a discharge step. It should on the other hand be noted that also possible are phases in which water already present in the tub is re-used or in which the water is not heated.

In general, in a charging step, the tub 3 is charged with a substantially predetermined amount of water. According to the selection and the start of a treatment program governed via the aforesaid control means, the control system governs opening of the solenoid valve 17 in order to introduce into the tub water coming from the water mains R. Once a certain volume or level of water is reached, the system closes the solenoid valve 17. In the heating step, the water charged into the tub 3 is heated to a substantially predetermined temperature (if the step in question is a hot step). For this purpose, the system enables electrical supply of the aforesaid resistance. Electrical supply of the resistance is interrupted by the control system when the system itself detects, for example via corresponding temperature-sensing means, that a substantially predetermined programmed temperature has been reached, or else upon expiry of a pre-set time in the case of timed heating. In the treatment step, the control system governs the pump 22 at a given treatment speed, necessary for supplying the water (whether heated or not) from the bottom of the tub 3b and from the sump 5 to the sprinkler system 18 and/or 19, so as to render operation of said system effective for the treatment of the dishes. Basically, then, the motor of the pump 22 is driven at a speed designed to bestow a pressure on the water in the ducts 20 and 21 such that the water comes out of the holes of the sprinklers 18 and/or 19 with an energy sufficient for striking the dishes contained in the respective racks 11 and/or 12 and performing the washing or rinsing function. At the same time, the water passes through each sprinkler with a pressure sufficient to cause rotation thereof so that the dishes are cyclically impinged upon by the jets of water. At the end of the treatment step, or of the last treatment step envisaged, the step of discharge is carried out, via which the water previously used for treatment of the dishes is discharged from the tub 3, via the drain pump 24 (or, according to a preferred embodiment of the invention, via the wash pump 22) governed by the control system.

As has been said, the control system of the machine 1 is prearranged for controlling execution of a plurality of programs for treatment of dishes. According to a preferred feature, these programs comprise at least one treatment program that includes:
- a first operative phase with use of heated water, such as a washing phase;
- a second operative phase with use of water preferably, but not necessarily, heated, such as a first rinsing phase; and
- a third operative phase with use of heated water, such as a second rinsing phase.

In a preferred embodiment, housed in the space 2a is a water-storage container, designated as a whole by 30 in Figure 3, having an inlet 31 and an outlet 32. Again according to said preferred embodiment, at least one portion of the first supply duct 13 - designated by 13a in Figure 3 and defined hereinafter as "heat-exchange portion" - extends within the storage container 30, to form a heat exchanger of a substantially static type therewith.

The machine 1 further comprises first controllable means, for supplying the container 30 with water used in the aforesaid first operating step, and second controllable means, for emptying from the container 30 the water contained therein. In the example of Figure 3, the aforesaid first controllable means include the wash pump 22 and the valve means 23, in combination with a duct 26 that extends between the valve means 23 and the inlet 31 of the container 30. Once again with reference to the example illustrated, the second controllable means include an additional drain pump, designated by 27, the intake branch of which is connected to the outlet 32 of the container 30 and the delivery of which is instead connected to a duct 28, which may be connected to the drain duct 25 (as illustrated) or be in parallel therewith. In the example, the duct 28 is connected to the duct 25, and provided thereon is a non-return valve 28a; a similar non-return valve 25a is also provided on the duct 25 in its stretch upstream of the connection to the duct 28. It should be noted that the non-return function of the valves 25a and 28a may be fulfilled or integrated in the pumps 24 and 27, according to a technique in itself known in the sector.

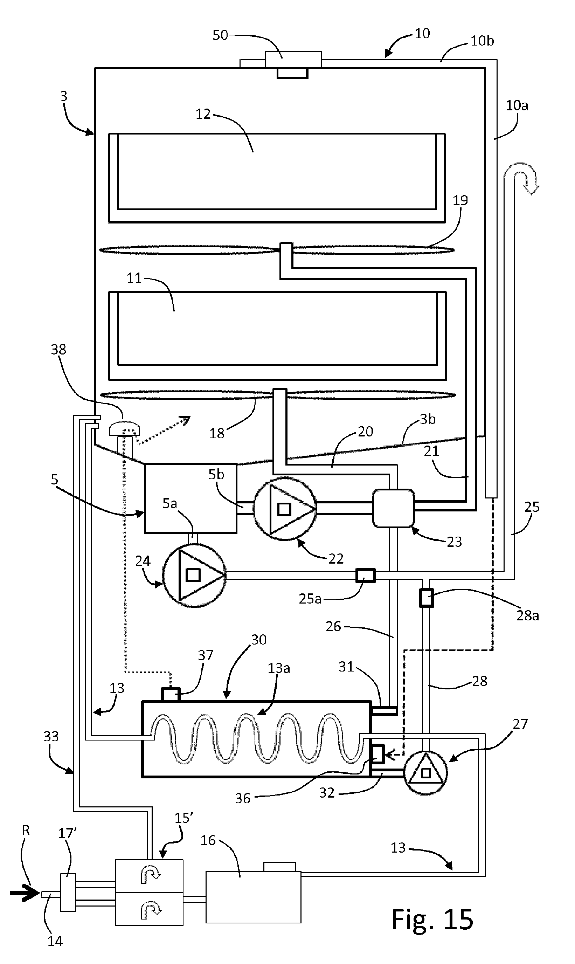

The machine 1 according to a preferred embodiment includes a second duct, for supply of water to the tub 3 from the water mains supply R. In the embodiment of Figure 3, this second supply duct, designated by 33, is in parallel with the heat-exchange portion 13a of the first supply duct 13. In a different embodiment, described hereinafter (Figure 15), the second supply duct 33 is substantially in parallel to the entire first supply duct 13.

Operatively associated to the second supply duct 33 are respective valve means, designated by 34. In the example of Figure 3, these valve means 34 are located substantially in a point where the second duct 33 branches off from the first duct 13 and may comprise a device that includes two solenoid valves or a deviator device, which can be controlled in such a way that the flow of water coming from the mains supply R, after passing beyond the devices 15 and 16, is directed alternatively towards the heat-exchange portion 13a of the first duct 13 or else into the second duct 33.

In one embodiment, the control system of the machine 1 is configured for:
- controlling the aforesaid first means - here represented by the wash pump 22 and by the valve means 23 in combination with the duct 26 - for discharging into the storage container 30 hot water that has been used in the aforesaid first operative phase;
- controlling the valve means 34 associated to the second supply duct 33, for feeding into the tub 3 water taken directly from the water mains supply R in order to perform the second operative phase: in this way, at least in the course of execution of the second operative phase, the hot water that has been previously discharged into the storage container 30 yields heat to the water that is contained in the heat-exchange portion 13a of the first supply duct 13;
- controlling the drain pump 24 in order to empty the machine of the water used in the second operative phase (whether it is heated water or non-heated water), at the end of this phase;
- controlling the valve means 17 associated to the first supply duct 13 for enabling transfer into the tub 3 of the water contained in the heat-exchange portion 13a of the first supply duct 13; and
- controlling the second means - represented by the additional pump 27 in combination with the corresponding duct 28 - in order to empty out the water contained in the water-storage container 30 towards the discharge 25.

The machine 1 is thus advantageously able to recover part of the heat of the water used in the first operative phase, to the advantage of the water to be used in the course of the third operative phase. In effect, at the end of the first operative phase, the hot water previously used in the tub is delivered to the container 30, which is traversed by the heat-exchange portion 13a of the first duct 13, which contains softened water coming from the mains supply R, at the mains temperature. The control system then controls opening of the valve means 17 and 34 so as to get water coming from the mains supply R, which is substantially at the mains temperature, to converge directly into the tub, via the second supply duct 33, for carrying out the second operative phase.

In this way, the hot water present in the container 30 heats the water present in the portion 13a of the first duct 13, in substantially static conditions of heat exchange. The adequate time of heat exchange is allowed by the fact that the machine 1, in the meantime, executes the second operative phase, using the water charged into the tub at the mains temperature. Indicatively, if the second phase is represented by a rinsing operation, its duration may be comprised between 10 and 15 min. While heat exchange takes place between the water contained in the container 30 and the water contained in the portion 13a of the duct 13, the machine 1 here executes an operative phase of wetting of the dishes: this proves advantageous in so far as it avoids the risk of possible residue of washing detergent drying on the dishes themselves.

After the second operative phase, for example after the step of discharge from the tub 3 of the corresponding non-heated water, a step of discharge of the water present in the container 30 is preferentially carried out via activation of the additional pump 27 by the control system. The valve means 17 associated to the first supply duct 13 are then opened, whereas the valve means 34 are in the non-operative condition; i.e., they obstruct the second duct 33. In this way, the water present in the heat-exchange portion 13a of the first duct 13, now partially heated, is forced into the tub 3 by the pressure of the water mains supply R itself: the new water at inlet from the mains supply R hence replaces the heated water that is delivered into the tub. This heated water that has reached the tub 3 can then undergo a step of further heating up to a pre-set temperature, via the traditional heating means of the machine, in order to perform the third operating step.

It will be appreciated that in this way it is possible to obtain energy saving, in particular reducing the duration of electrical supply necessary for the heating means to bring the water charged into the tub to the aforesaid pre-set temperature, and reducing as a whole the programming time. A resulting advantage is that the part of water coming from the mains supply R remains in the supply ducts 13 and 33 up to execution of a subsequent washing cycle performed by the machine 1, thereby undergoing a certain increase in temperature (for example, from approximately 15°C of the mains supply R to approximately 20°C of room temperature), which also has positive effects on the reduction of the energy-consumption levels.

As has been seen previously, in a preferred embodiment, associated to the collecting sump 5 is the filtering system including the filters 6-8 having meshes of different dimensions. It will thus be appreciated that the means represented by the pump 22, by the valve means 23, and by the duct 26 enable supply of the container 30 with water filtered by at least two of the aforesaid filters. The hot water that is delivered to the container 30, albeit water already used for one treatment of the dishes, is hence water filtered substantially in a fine way, and hence tending to be without significant residue of dirt. In this way, the risk of clogging of the water-storage container 30 and of the ducts associated thereto is drastically reduced.

As has been mentioned, the means for supplying the container 30 preferentially comprise a device 23 for alternate supply of at least two sprinkling members 18 and 19 of the sprinkler system of the machine. In a preferred embodiment, this device 23 includes an outlet, which, via the duct 26, is connected to the inlet 31 of the container 30, as well as a controllable open/close member, which can assume a plurality of alternative positions, in at least one of which the aforesaid outlet is open. In this way, control of the supply of the storage container 30 can be obtained by exploiting prevalently means that must in any case be provided on board the machine, and especially in its base 2 or space 2a, to the advantage of the reduction of the number of components and of the overall dimensions.

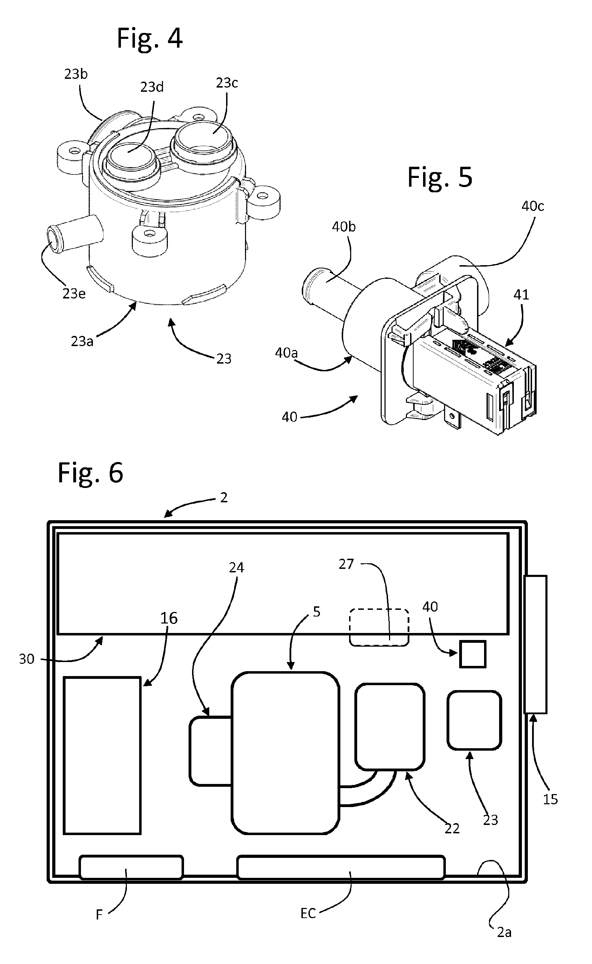

An example of device 23 that can be used for the purpose is illustrated schematically in Figure 4. The device 23, like similar devices according to the known art, has a casing 23a provided with an inlet 23b, designed for connection to the delivery of the wash pump 22, and two main outlets 23c and 23d, connected to the supply ducts 21 and 20 of the upper sprinkler and of the lower sprinkler, respectively. Mounted displaceable inside the casing 23a is an open/close member or distributor, which can be operated by a corresponding actuator, isolated with respect to the fluid, to assume at least a first position, for opening both of the outlets 23c and 23d, and a second position, for opening the outlet 23c and for closing the outlet 23d and/or vice versa, once again according to known technique. For example, the aforesaid distributor member may be disk-shaped or have the shape of a circular sector, with one or more through holes, and be mounted displaceable in front of the aforesaid outlets 23c and 23d.

According to a characteristic envisaged in one embodiment, the device 23 is configured in such a way that the casing 23a additionally defines a further outlet, designated by 23e, which preferentially has a section of passage smaller than that of the outlets 23c and 23d, to which the inlet of the supply duct 26 of the storage container 30 is connected.

In one embodiment, control of opening and closing of the outlet 23e is obtained by way of the aforesaid open/close member or internal distributor of the device 23. In this way, when the water must be directed towards the container 30, the outlet 23e is opened (the outlets 23c, 23d may indifferently be open or closed) in such a way that - given the active condition of the wash pump 22 - the volume of water contained in the tub is progressively transferred into the container 30 (such a case is represented in Figure 15).

In a different embodiment, as exemplified in Figure 3, the outlet 23e is always in fluid communication with the inlet 23b of the device 23, irrespective of the operating position of the aforesaid distributor member. In this case, connected to the outlet 23 is the first end of the duct 26, the second end of which is connected to the inlet 31 of the container 30, with interposition of further valve means 40, of any known conception.

A possible embodiment of a valve that can be used for this purpose is exemplified in Figure 5. The valve, designated by 40, is preferentially a valve of an open/close type, which includes a connection body 40a having an inlet 40b, connected to which is the duct 26, and an outlet 40c, connected with interposition of suitable sealing means to the inlet 31 of the container 30. Operative between the inlet 40c and the outlet 40d, within the body 40a, is an open/close element, displaceable by means of an actuator that, in the embodiment exemplified, is an electro-thermal actuator 41, of a type in itself known. The valve 40 can thus be operated by the control system in a way independent of the device 23 and is of a normally closed type: consequently, in the absence of supply to the actuator 41, the tube 26 is not in fluid communication with the container 30.

In this embodiment, when the heated water present in the tub, used in the first operative phase, is to be delivered to the container 30, the control system governs opening of the valve 40, with the wash pump 22 active. In this way, and irrespective of the operating position of the internal distributor member of the device 23, the water is progressively delivered into the duct 26, and hence into the container 30.

Preferentially, as has been seen, the means for emptying from the container 30 the water contained therein include a pump 27, operatively set between the outlet 32 of the container 30 and a drain duct 25 of the machine. Emptying-out of the water hence preferably occurs in a forced way, and this ensures emptying of the container 30, at the same time reducing the risk of any clogging and deposits of dirt within the container itself. For this purpose, the outlet 32 is preferably located in a low point of the container 30.

The useful capacity of the heat-exchange portion 13a of the supply duct 13 may substantially be equal to or less than the useful capacity of the water-storage container 30. In general terms, the overall useful capacity of the heat exchanger represented by the container 30 and by the heat-exchange portion 13a may be substantially equal to the volume of water necessary for execution of two steps of the washing cycle (preferably from 5 to 6.7 l).

In one embodiment, the container 30 has a useful capacity substantially equal to or slightly greater than the volume of water that is used in the course of the first operative phase. In a preferred embodiment, this useful capacity is comprised between 2.7 and 3.7 l, preferably between 2.9 and 3.5 l, very preferably between 3 and 3.3 1, whereas the portion 13a of the first duct 13 has a useful capacity comprised between 2.2 and 3.4 1, preferably between 2.4 and 3.2 1, very preferably between 2.3 and 3 1.

The useful capacity of the container 30 may even be less than the volume of water used in the course of the first operative phase. For such a case, after the step of filling of the container 30, the control system will activate the drain pump 24 for emptying any possible residual water from the tub 3 and/or from the sump 5.

In general terms, then, within the heat exchanger constituted by the water-storage container 30 and by the heat-exchange portion 13a of the duct 13, the amount of hot water may be greater than that of the water at the temperature of the water mains supply R, and this favours the effectiveness of heat exchange and energy gain. Of course this means that, in such an embodiment, the third operative phase of the treatment program will be carried out with an amount of water less than that used for execution of the first operative phase. This is not on the other hand a source of particular problems, considering, for example, that already at present the washing phase in the strict sense of a load of dishes is frequently executed with an amount of water greater than that used for execution of a subsequent hot-rinsing phase of the same treatment program, driving the wash pump at a lower speed in the course of the rinsing operation. In a possible embodiment, for example, the third operative phase is executed for approximately half of its duration by operating the pump 22 at a reduced speed and/or using just one of the sprinklers 18 and 19.

In one embodiment, the storage container 30 extends in a generally rear area of the base 2 or of the housing space 2a, preferably crosswise with respect to the side walls of the base or of the structure of the machine, and at least behind the collecting sump 5, the wash pump 22, the drain pump 24, and the water-softening device 16 (if the latter is provided on board the machine). This arrangement enables exploitation to the full of the space available within the base and optimization of the dimensions of the storage container. Such an arrangement is exemplified schematically in Figure 6, where there are moreover visible the device 23 for alternate supply of the sprinklers, the valve 40, and the pump 27. In the figure, designated by F is an anti-noise filter, provided for reasons of electromagnetic compatibility, and designated by EC is an electronic card that implements part of the control system of the machine. Moreover visible in the figure is the air-break device 15, which, as per the prior art, can be associated to a side wall of the tub 3.

It will be appreciated that, in this way, in the rear part of the base 2, or in any case of the structure of the machine, there is always present a volume of water, which is at least equal to that contained in the portion 13a of the supply duct 13, this volume of water possibly contributing to counterbalancing the machine 1. In this regard, it should be recalled that current household dish washers have, for various reasons, a relatively light load-bearing structure, so that there exists the risk - in particular in the case of free-standing machines - of the machine tending to tip over forwards when its door is opened and the corresponding racks with the load of dishes are taken out of the tub: for this reason, it frequently becomes necessary to equip the machine with purposely designed counterweights. The proposed solution enables elimination of the above counterweights or at least reduction of the volume and weight thereof.

With reference to the above aspect, and when the storage container 30 is not used as active part of a drying system of the machine, the control system can be configured for governing the aforesaid second means (especially the additional pump 27) in order to empty out the water contained in the container 30 only after start of a treatment program that follows in time the treatment program in the course of which water has been delivered to the container itself. Thanks to this characteristic, the volume of water that functions as counterweight can be increased, with the advantages that this entails.

As has been mentioned previously, according to a particularly advantageous embodiment, the machine 1 comprises a drying circuit, preferably of a substantially closed type, and the storage container 30 is used as active part of the drying system.

As represented schematically in Figure 3, the container 30 has at least one first inlet 36 for the air, preferably in a region higher than the minimum level that can be reached by the water in the container itself, and at least one air outlet 37, preferably in an upper region thereof and in fluid communication with the inside of the tub 3.

In the example illustrated, the drying circuit then includes the hollow body 10, operatively associated to which is a fan, designated as a whole by 50. In the example, the fan 50 is associated to the hollow body 10, with its intake branch that is in fluid communication with an opening present in the upper wall of the tub and with its delivery branch that is instead connected to the inlet of the hollow body 10. The outlet of the hollow body 10 is instead in fluid communication with the air inlet 36 of the storage container 30, the air outlet of which 37 communicates with the inside of the tub 3. In this embodiment, the inlet for the drying air into the tub may, for example, be defined at the bottom wall 3b of the tub. This inlet preferably includes a passage of the wall 3b, and a tubular chimney 38, of a conception in itself known, which extends through this passage. In general, such a chimney 38 has an upper end and a lower end that open on opposite sides of the wall 3b, the upper end being located higher up than the maximum level that can be reached by the water in the course of the washing or rinsing operations executed by the machine 1. Preferentially, associated to the upper end of the chimney 38 is a cap or lid, which defines a substantially shielded or labyrinthine path, whilst its lower end is connected in fluid communication to the air outlet 37 of the container 30.

At least one of the treatment programs envisaged by the machine includes a dish-drying phase, which is executed in a time after emptying-out of the water from the water-storage container 30, or in any case when the container 30 is substantially empty.

In the drying step, the fan 50, controlled by the control system, draws in the humid air present in the tub 3 and forces it into the hollow body 10, in a downward direction. Advantageously, the hollow body 10 can be configured to perform functions of condensation, for example there being provided within it a tortuous path for the air. At outlet from the hollow body 10, the air penetrates into the water-storage container 30, through its inlet 36, and then returns into the tub, via the outlet 37 and the chimney 38: in this way, the flow of air, which is still relatively hot, that passes into the container 30 laps the heat-exchange portion 13a of the duct 13. In this phase, the portion 13a contains water that is substantially at the temperature of the water mains R, and this favours condensation of the humidity still present in the air that has been extracted from the tub by means of the fan 50. Condensation of this humidity determines formation of drops of water, which are collected in the container 30.

In a particularly advantageous embodiment it is envisaged that, prior to start of the drying phase or in the course of this phase, the control system governs the valve means 17 associated to the first supply duct 13 to cause short opening thereof. Thanks to these brief pulses of opening of the solenoid valve 17, modest amounts of water at the temperature of the mains supply R reach the initial section of the heat-exchange portion 13a of the duct 13 in order to increase the effectiveness of condensation of the humidity present in the circulating air.

To clarify this idea better, reference may be made to Figure 3, where the container 30 is visible, within the heat-exchange portion 13a of the duct 13, configured substantially as a coil or in any case having a substantially tortuous development: as may be seen, the air inlet 36 is substantially close to the initial stretch of the portion 13a. The air that penetrates from the inlet 36, which is still relatively hot, impinges first upon the aforesaid initial stretch of the portion 13a, which tends to be at the mains temperature: as has been said, this favours condensation of the humidity present in the air. However, the air at inlet is relatively hot, and this progressively brings about heating of the water contained in the aforesaid initial stretch of the portion 13a. For this reason, by opening the solenoid valve 17 for a short period, it is possible to replace this water partially heated by the air with new water, substantially at lower temperature, which fills the first turn or turns of the portion 13a: in this way, the efficiency of condensation can be re-established. In this perspective, in the context of the drying phase there may be envisaged a plurality of the aforesaid brief interventions of opening of the solenoid valve 17, set at a distance apart in time from one another and controlled by the control system (the times may, for example, be pre-set, on the basis of experimental tests).

With this methodology of operation there is obtained a passage of water into the tub during drying, but the corresponding volume is very modest, in the region of 200-400 cc, and in any case not more than one litre. On the other hand, the presence of this volume of water delivered into the tub proves advantageous in so far as it enables provision of a sort of "water plug" in the area of the sump 5, which prevents any dispersion of the flow of air in this area.

In a preferred embodiment, the portion 13a of the first supply duct 13 has a substantially tortuous development. This enables an increase of the capacity of this portion 13a and a considerable increase of the surface of heat exchange between the heated water delivered to the container 30 and the water present in the portion itself.

Once again preferentially, the portion 13a of the supply duct 13 is made up of a plurality of hollow modular elements, coupled together in fluid communication and each having an inlet and an outlet. In this way, the portion 13a of the first duct 13 can be obtained by assembling together a plurality of components, connecting them in series by connecting the outlet of one such element with the inlet of the next element of the series, and with the corresponding larger faces of the various hollow elements preferably set at a distance apart from one another. In this way, it is possible to bestow on the hollow elements a convenient shape for the purposes of heat exchange, production of the heat exchanger is simplified, and the heat-exchange surface can be maximized.

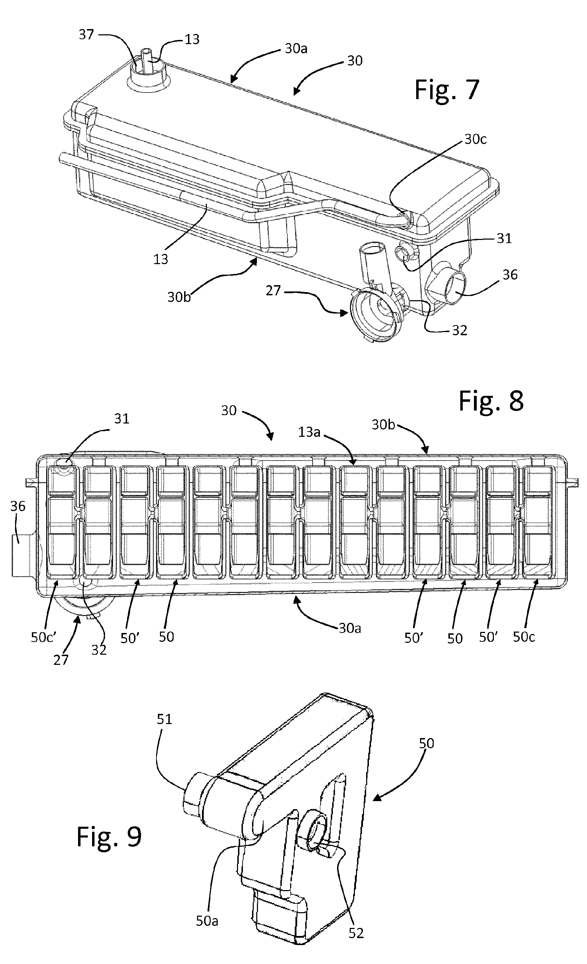

Figure 7 illustrates a possible embodiment of the storage container 30, within the corresponding heat-exchange portion 13a (not visible) of the first supply duct 13.

The container 30 has a longitudinally extended body, formed preferentially in at least two parts made of plastic material, even though not ruled out in principle is the possibility of it being made of metal. In the example, the body of the container 30 consists of a lower part 30a and an upper part 30b, coupled together in a fluid-tight way at respective flanged parts, for example thermally welded or fixed to one another with threaded means and interposition of suitable sealing means.

The body of the container 30 has, preferably in a side wall thereof, the respective inlet 31 and outlet 32 for the water. Preferentially, the inlet 31 is located in a generally upper region of the container 30, whereas the outlet 32 - to which the pump 27 is associated - is located in a lower region of the container itself. From Figure 8 it may be noted how, in a preferred embodiment, the bottom wall of the container 30, i.e., of its lower part 30a, is at least slightly inclined so as to favour off-flow of the water towards the outlet 32. In Figure 7 moreover visible are the inlet 36 and the outlet 37 for the drying air.

In the body of the container 30, for example in its upper part, passages are defined for enabling connection, upstream and downstream of the container 30, of the heat-exchange portion 13a to the supply duct 13. One of these passages, at which suitable sealing means are preferentially operative, is designated by 30c in Figure 7, for the branch of the duct 13 that is upstream of the portion 13a. In the example represented, the passage for the branch of the duct 13 that is downstream of the portion 13a is represented by the outlet 37 for the drying air: there is nothing, on the other hand, to rule out purposely providing a passage similar to the one designated by 30c.

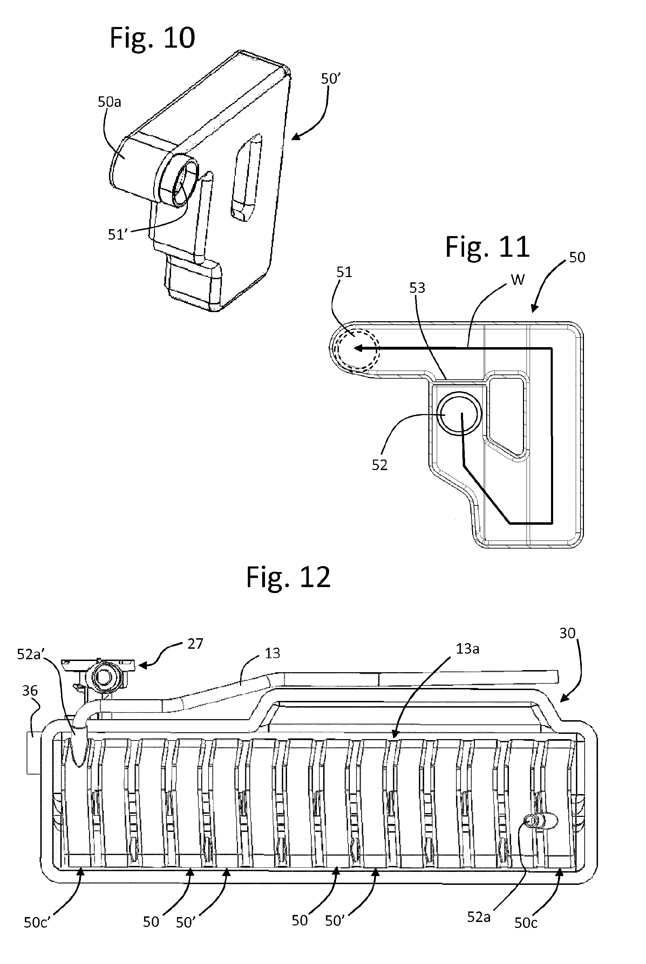

Visible in Figure 9 is one of the hollow modular elements used for providing, in a preferred embodiment, the heat-exchange portion 13a of the supply duct 13. The element represented, designated as a whole by 50, is of a first type, with a hollow body preferably made of plastic material, even though not excluded in principle is the possibility of it being made of metal. In the example, the body of the element 50 has a generally annular shape with a projecting upper portion 50a. In this upper portion 50a, defined on a side face or end face of the body, here the left-hand face, is a first connection 51; a second connection 52 is defined in an intermediate area of the opposite side face, here the right-hand face, preferably just slightly beneath the connection 51. Figure 10 illustrates, instead, a hollow modular element of a second type, designated by 50'. In general terms, the structure of the element 50' is similar to that of the element 50, but with a symmetrical or reversed arrangement of the corresponding connections: basically, then, the upper connection, here designated by 51' is located on the right-hand face of the body of the element 50', whereas the second connection, not visible but designated hereinafter by 52', is now located on the left-hand face (not visible).

Defined within the cavity of the elements 50, 50' is at least one intermediate closing wall, visible in Figure 11 for an element 50, where it is designated by 53. This wall 53 basically extends into the annular part of the body of the hollow element, above the intermediate connection 52 or 52'. In any case, the wall 53 is defined in such a way that the water passing within the hollow body cannot pass directly between the two connections following the shortest path, but will, instead, necessarily have to follow the longer path, i.e., prevalently the aforesaid annular part, as indicated by way example by the arrow W of Figure 11 for an element 50 (in the case of an element 50', the path of the water will be reversed with respect to an element 50, i.e., from the connection 51' to the connection 52').

Preferentially, the diameter of the connection 51 is slightly larger than the diameter of the connection 51', or vice versa, in such a way that they may possibly be fitted in a fluid-tight way in one another, with possible interposition of a gasket or of an applied sealant, for example silicone. For the same reasons, preferentially, the diameter of the connection 52 is slightly larger than the diameter of the connection 52', or vice versa.

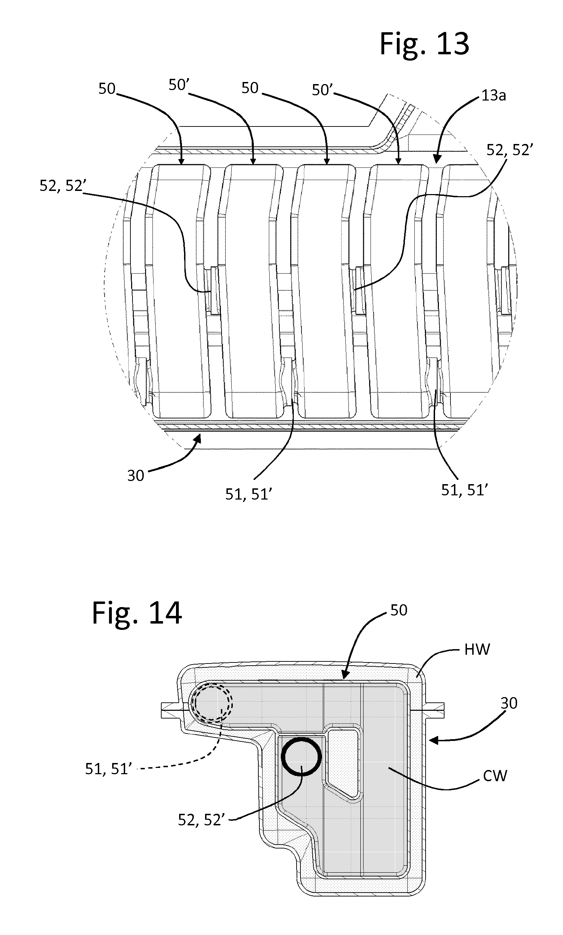

In this way, as may be appreciated, a plurality of elements 50 and 50' can be assembled together in an alternating way, to provide the heat-exchange portion 13a of the supply duct 13, as exemplified in Figures 8 and 12. Connection of the elements is in series and is obtained by fitting the outlet of one element to the inlet of the next element. Such a mode of connection is clearly visible in Figure 13: visible in this partial, schematic, cross-sectional view is the connection of the connections 52', which here function as outlets of the elements 50', to the connections 52, which here function as inlets of the elements 50, as well as the connection of the connections 51', which here function as inlets of the elements 50', to the connections 51, which here function as outlets of the elements 50.

In the example represented, provided at the two ends of the heat-exchange portion 13a are hollow modular elements 50c and 50c' having a shape modified with respect to the elements 50 and 50'. The hollow element designated by 50c is largely similar to the elements 50, but is without the connection 52, which is replaced by a connection 52a that is located in the upper part of the element itself. Likewise, the hollow element designated by 50c' is largely similar to the elements 50', but is without the connection 52', which is replaced by a connection 52a that is located in the upper part of the element itself. The use of hollow elements 50c and/or 50c' is preferred in the case where it is desired to have the inlet and the outlet of the portion 13a in the upper area of the container 30 and/or to obtain maximization of the useful dimensions of the portion 13 itself within the container 30. On the other hand, there is nothing to rule out using, at the two opposite ends of the heat-exchange portion 13a, two hollow elements 50 and 51', in which case the passages for connection of the portion 13a to the stretches of the duct 13, upstream and downstream, will be envisaged in the two opposite end walls of the container 30 (for the stretch upstream, the inlet 36 for the drying air may also be exploited).

As may be appreciated, with the arrangement illustrated, the water coming from the mains supply R penetrates into the element 50c' through its connection 52a, filling it, and then passes into the next element 50, in turn filling it, and so on up to the last element of the series, here represented by the element 50c, with its connection 52a that functions as outlet of the portion 13a. Thanks to the presence of the wall 53 of the hollow elements 50, 50', 50a, 50a, the connection of these elements in series practically simulates a coiled duct, with sequential filling of the elements themselves.

Obviously, after initial operation of the machine 1 following upon its installation, the heat-exchange portion 13a, i.e., the hollow elements that constitute it, always tend to be full of water. It is in fact evident that, when the solenoid valve 17 of Figure 3 is open and also the valve means 34 are in the condition for opening the duct 13, the water coming from the mains supply R, at the pressure of the latter, will in any case keep the duct 13 full of water, downstream of the air-break device 15; upon re-closing of the solenoid valve 17 and switching of the duct 13 to the closed condition by the valve means 34, the branch of the duct downstream of these means 34 will in any case remain full of water.

Figure 14 exemplifies, via a cross-sectional view in side elevation, the condition that arises when the heat-exchange portion 13a and the container 30 are both full of water. Basically, the tortuous portion 13a formed by the hollow elements - initially containing non-heated water CW - is practically completely immersed in the heated water HW present in the container 30. In the course of execution of the second operative phase of the treatment program (i.e., the phase performed with water charged into the tub via the second supply duct 33) heat exchange occurs between the two fluids HW and CW, with the former that yields heat to the latter. It will be appreciated that, in the particularly advantageous embodiment illustrated in Figures 7-14, the surface of heat exchange is very extensive, in particular by virtue of the fact that also the larger faces of the hollow elements 50, 50', 50a, 50a are set apart from one another. Indicatively, as compared to a known machine of the type having a storage container set up against a side wall of the tub, the preferential solution proposed enables increase by between 3 and 4 times of the breadth of the heat-exchange surface.

As has been said previously, the heat exchanger constituted by the container 30 and by the heat-exchange portion 13a can be exploited also for execution of a drying phase, and in this case the container 30 has an inlet 36 and an outlet 37 for the air. When the heated water is delivered to the container 30, at the end of the first operative phase of the program, there are no risks of overflowing of the water through said inlet and outlet. If for any reason (for example, malfunctioning) a volume of water exceeding its useful capacity is delivered to the container 30, the water in excess can flow back freely into the tub, through the outlet 37 and the chimney 38. On the other hand, also under normal conditions, part of the heated water delivered to the container 30 may converge into the air inlet 36, and possibly climb up along the drying circuit (especially along the hollow body 10, in the example shown): it is in any case clear that, upon discharge of the container 30, also this water present in the drying circuit will be emptied out.

In one embodiment, the valve means associated to the first supply duct 13 and the valve means associated to the second supply duct 33 can be integrated in one and the same device. Also this solution simplifies assembly of the machine and enables a reduction of the overall dimensions, in particular in the base of the machine. Such a solution is exemplified in Figure 15, where the same reference numbers as those used in the previous figures are used to indicate elements technically equivalent to the ones described above.

In the embodiment in question, the charging solenoid valve 17 and the valve means 34 of Figure 1 are replaced by a single device 17' that can be controlled by the control system of the machine, such as for example a device including an inlet and two outlets controlled by respective open/close means, for example two solenoid valves. As may be seen, in this case, the second supply duct 33 is substantially in parallel with the first supply duct 13.

Operation of the machine 1 of Figure 15 is similar to what has been described previously, with the difference that, in order to charge the tub with the water necessary for execution of the first operative phase, and respectively of the third operative phase, of the first treatment program, the control system governs the device 17' in such a way as to open the duct 13, keeping the duct 33 closed. Vice versa, in order to perform the second operative phase, the control system governs the device 17' in such a way as to open the duct 33, keeping the duct 13 closed.

The second supply duct 33 can be derived from the first supply duct downstream of the water-softening device 16, as in the embodiment of Figure 3, or else upstream thereof, in which case the valve means 34 may be provided between the air-break device 15 and the water-softening device 16. In the first case, the second operative phase of the first treatment cycle will be executed using softened water, whereas in the second case with water at the degree of hardness of the mains water. This is not a source of particular problems, given that the second operative phase is obtained with non-heated water, substantially at the temperature of the mains supply R, i.e., at a temperature that does not bring about precipitation of the limescale. In this way, the use of water-softening resins, and hence of the salt necessary for their regeneration, is moreover reduced. On the other hand, the presence of a water-softener is not strictly indispensable.

The aim of Figure 15 is moreover to explain a further possible variant embodiment. The air-break device, when necessary for normative reasons, can be provided along at least one of the first supply duct 13 and the second supply duct 33. In the case of the embodiment of Figure 3, the air-break device 15 is located along the first supply duct 13, upstream of the water-softening device 16, with the second supply duct 33 that branches off from the first duct 13 downstream of the device 15. In this embodiment, it is thus possible to reduce the number of components of the machine. On the other hand, in a different embodiment, exemplified in Figure 15, both of the supply ducts 13 and 33 can each be provided with an air-break device. In the example represented, the reference 15' designates precisely a device that includes two distinct air breaks, one for the duct 13 and the other for the duct 33. As may be appreciated, in this embodiment the second operative phase is executed using non-softened water.

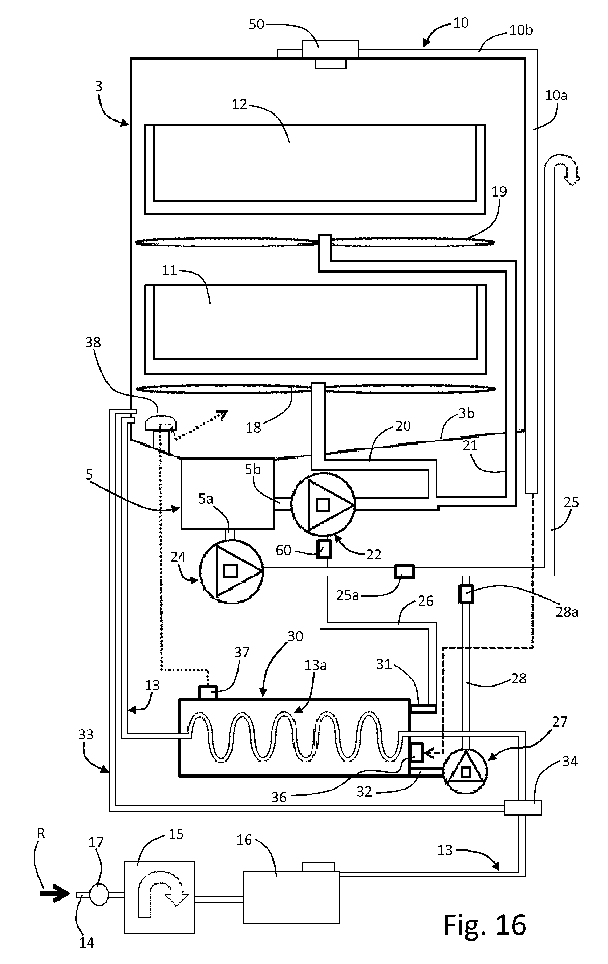

Figure 16 illustrates a further variant embodiment, which differs from the embodiment of Figure 3 substantially for the absence of the valve device 23 for alternate supply of the sprinklers 18 and 19. In this solution, the delivery of the wash pump 22 is directly connected to the ducts 20 and 21 so that the sprinklers 18 and 19 are always fed simultaneously.

In this solution, for example in any point of the volute of the pump (or at its delivery) an outlet is defined, connected to which is the inlet of the duct 26 for supply of the storage container 30, there being operative on this duct a corresponding valve means 60, for example a valve built like the valve 40 of Figure 5, of a normally closed type. In this embodiment, then, when the hot water used for carrying out the first operative phase of the program is to be delivered into the container 30, the control system controls opening of the valve 60 and activates the pump 22. In this way, the water present in the tub 3 is progressively sent into the container 30. As in the previous embodiments, this step of discharge of the water contained in the tub 3 into the container 30 can have a pre-set duration, such as to guarantee emptying of the tub, or else may be dependent upon the vacuum level of a pressure switch so as to prevent any cavitation noise.

Of course, the variants described with reference to Figures 15 and 16 may be variously combined together and with the embodiment of Figure 3.

It is clear that numerous variations are possible for the person skilled in the branch to the dish-washing machine described by way of example, without thereby departing from the scope of the invention as defined in the annexed claims.

In the embodiments described previously, the cold rinsing phase that constitutes the second operative phase may be replaced by a phase basically consisting of charging the tub with water at the mains temperature, via the duct 33, and recirculating it by means of the wash pump 22 (for example, with use of the bottom sprinkler alone) for carrying out cleaning of the bottom wall 3b of the tub 3 and of the sump 5. The second operative phase may also be a hot step.

In a particularly advantageous variant, at least one of the water-storage container 30 and the heat-exchange portion 13a of the first supply duct may be at least partially integrated in a base of the machine, or else be at least in part made of a single piece therewith.

## Claims

1. A dish-washing machine, comprising a base (2), a wash tub (3) supported by the base (2) and a control system (EC), wherein:
- the base (2) defines a housing space (2a) for operating components of the machine (1);
- the tub (3) has a lower wall (3b) to which a collecting sump (5) is associated, which protrudes in the housing space (2a);
- in the housing space (2a) there are housed a wash pump (22), which is in fluid communication with the collecting sump (5) and is prearranged for supplying a sprinkler system (18, 19) operative within the tub (3), and a drain pump (24) in fluid communication with the collecting sump (5) and prearranged for draining in a forced way water from the tub (3) via a drain duct (25);
- the machine (1) has connection means (14), configured for connection to a water mains (R) and connected via a first supply duct (13) to a water inlet of the tub (3), valve means (17, 34; 17') being operatively associated to the first supply duct (13);
- the control system (EC) is prearranged for controlling execution of a plurality of dish-treatment programs, amongst which at least one first treatment program that includes a plurality of operative phases,
wherein the machine (1) further comprises:
- a storage container (30) having a water inlet (31) and a water outlet (32);
- first means (22, 23, 26, 40; 22, 23, 26; 22, 26, 60), for supplying the storage container (30) with water, and second means (27, 28), for emptying from the storage container (30) water contained therein;
- a fan (50) having an intake branch, in fluid communication with the inside of the tub (3), and a delivery branch,
**characterized in that**:
- at least one portion (13a) of the first supply duct (13) extends within the storage container (30);
- the first treatment program includes a drying phase that can be executed at a time after emptying of water from the storage container (30), or in any case in a condition where the storage container (30) is substantially empty;
- the storage container (30) has at least one air inlet (36), in fluid communication with the delivery branch of the fan (50), and at least one air outlet (37), in fluid communication with the inside of the tub (3);
- the control system (EC) is configured for controlling the fan (50) during the drying phase, for causing passage of an air flow in the storage container (30), between the air inlet (36) and the air outlet (37), in such a way that the air flow laps said portion (13a) of the first supply duct (13).

2. The dish-washing machine according to Claim 1, wherein the control system (EC) is prearranged for controlling one or more short openings of the valve means (17; 17') associated to the first supply duct (13) before and/or during execution of the drying phase.

3. The dish-washing machine according to Claim 1 or Claim 2, wherein:
- at least one said treatment program includes:
- a first operative phase, in particular a wash phase;
- a second operative phase, in particular a first rinse phase;
- a third operative phase, in particular a second rinse phase;
- the machine (1) comprises a second supply duct (33), in parallel with one of the first supply duct (13) and said portion (13a) of the first supply duct (13), for supplying in the wash tub water from the water mains (R), valve means (17'; 34) being operatively associated to the second supply duct (33);
- the control system (EC) is configured for:
- controlling said first means (22, 23, 26, 40; 22, 23, 26; 22, 26, 60), for discharging in the storage container (30) heated water used in the first operative phase;
- controlling the valve means (17'; 34) associated to the second supply duct (33) for supplying in the tub (3) water from the water mains (R), in order to perform the second operative phase, in such a way that, during execution of the second operative phase, heated water discharged in the storage container (30) yields heat to water contained in said portion (13a) of the first supply duct (13) under substantially static conditions;
- controlling the drain pump (24) for discharging from the tub (3) the water used in the second operative phase;
- controlling the valve means (17, 34; 17') associated to the first supply duct (33) for enabling transfer into the tub (3) of water contained in said portion (13a) of the first supply duct (13); and
- controlling said second means (27, 28) for the purposes of emptying from the storage container (30) the water contained therein.

4. The dish-washing machine according to any one of the preceding claims, wherein associated to the collecting sump (5) is a filtering system including a plurality of filters (6, 6a, 7, 8) having meshes of different dimensions, and wherein said first means (22, 23, 26, 40; 22, 23, 26; 22, 26, 60) are prearranged for supplying the storage container (30) with water filtered by one or more filters (6, 6a, 7, 8) of said plurality, said first means including the wash pump (22).

5. The dish-washing machine according to Claim 4, wherein said first means (22, 23, 26, 40; 22, 23, 26; 22, 26, 60) comprise an arrangement for alternate supply (23, 40) of at least two sprinkling members (18, 19) of the sprinkler system, said arrangement (23, 40) including at least one outlet (23e) connected to the water inlet (31) of the storage container (30) and a controllable member (40), capable of assuming a plurality of alternative positions, amongst which a position of opening of said outlet (23e) of the arrangement for alternate supply (23, 40).

6. The dish-washing machine according to any one of the preceding claims, wherein said second means include a pump (27) operatively set between the water outlet (32) of the storage container (30) and the drain duct (25).

7. The dish-washing machine according to any one of the preceding claims, wherein said portion (13a) of the first supply duct (13) has a substantially tortuous or coil-shaped development.

8. The dish-washing machine according to Claim 7, wherein said portion (13a) of the first supply duct (13) comprises a plurality of hollow modular elements (50, 50'), coupled to one another in fluid communication and each having an inlet (52, 51') and an outlet (51, 52').

9. The dish-washing machine according to any one of the preceding claims, wherein the valve means associated to the first supply duct (13) and the valve means associated to the second supply duct (33) are integrated in one and the same device (17'), such as a device including two valves.

10. The dish-washing machine according to any one of the preceding claims, wherein operative on at least one of the first supply duct (13) and the second supply duct (33) is an air-break device (15; 15').

11. The dish-washing machine according to Claim 1, wherein the storage container (30) is housed in the housing space (2a) and preferably extends in a rear area of the base (2), in a position behind the collecting sump (5), the wash pump (22), and the drain pump (24).

12. The dish-washing machine according to Claim 11, wherein moreover housed in the housing space (2a) is a water-softening device (16) having an inlet, in fluid communication with the connection means (14), and an outlet in fluid communication with the first supply duct (13), the storage container (30) extending in a position which is also behind the water-softening device (16).

13. The dish-washing machine according to any one of the preceding claims, wherein the control system (EC) is configured for controlling the second means (27), for the purposes of emptying water contained in the storage container (30) after start of a treatment program which follows in time the program during which water has been let in the storage container (30).

14. The dish-washing machine according to any one of the preceding claims, wherein at least one of the storage container (30) and said portion (13a) of the first supply duct (13) is at least partially integrated in the base (2), or else at least in part made of a single piece therewith.

15. A method for drying dishes in a household dish-washing machine (1) having a wash tub (3), a water-storage container (30), a drying system (10, 50), and a duct (13) having associated valve means (17; 17') for supplying into the tub (3) water from a water mains (R),
the method being **characterized by** comprising a dish-drying phase at a time after emptying-out of the water contained in the storage container (30), the drying phase comprising actuating a fan (50) of the drying system for causing passage of a forced air flow in the storage container (30), between a respective air inlet (36) in fluid communication with a delivery of the fan (50) and an air outlet (36, 37) in fluid communication with the inside of the tub (3), in such a way that the flow of air laps at least one portion (13a) of said duct (13) that extends in the inside of the storage container (30), before and/or during execution of the drying phase being preferably carried out one or more short openings of the valve means (17; 17') associated to said duct (13).

## Patentansprüche

1. Geschirrspülmaschine, umfassend eine Basis (2), einen Waschbottich (3), der durch die Basis (2) gestützt ist, und ein Steuersystem (EC), wobei:
- die Basis (2) einen Unterbringungsraum (2a) für Betriebskomponenten der Maschine (1) definiert;
- der Bottich (3) eine untere Wand (3b) aufweist, mit der ein Sammelbehälter (5) verbunden ist, der in den Unterbringungsraum (2a) ragt;
- in dem Unterbringungsraum (2a) eine Waschpumpe (22), die in einer Fluidkommunikation mit dem Sammelbehälter (5) steht und bestimmt ist, eine Sprinkleranlage (18, 19), die in dem Bottich (3) operativ ist, bereitzustellen, und eine Entwässerungspumpe (24), die in einer Fluidkommunikation mit dem Sammelbehälter (5) steht und bestimmt ist, in einer erzwungenen Weise Wasser aus dem Bottich (3) über eine Entwässerungsleitung (25) zu entwässern, untergebracht sind;
- die Maschine (1) Verbindungsmittel (14) aufweist, die für eine Verbindung mit einer Wasserhauptleitung (R) ausgebildet sind und über eine erste Versorgungsleitung (13) mit einem Wassereinlass des Bottichs (3) verbunden sind, wobei die Ventilmittel (17, 34; 17') operativ mit der ersten Versorgungsleitung (13) verbunden sind;
- das Steuersystem (EC) bestimmt ist, eine Ausführung einer Mehrzahl von Geschirrbehandlungsprogrammen, unter denen zumindest ein erstes Behandlungsprogramm ist, das eine Mehrzahl von operativen Phasen beinhaltet, zu steuern,
wobei die Maschine (1) des Weiteren umfasst:
- einen Speichercontainer (30), der einen Wassereinlass (31) und einen Wasserauslass (32) aufweist;
- erste Mittel (22, 23, 26, 40; 22, 23, 26; 22, 26, 60) zum Versorgen des Speichercontainers (30) mit Wasser, und zweite Mittel (27, 28) zum Entleeren, aus dem Speichercontainer (30), von darin enthaltenem Wasser;
- ein Lüfter (50), der einen Aufnahmezweig, der in einer Fluidkommunikation mit dem Inneren des Bottichs (3) steht, und einen Abgabezweig aufweist, **dadurch gekennzeichnet, dass**:
- zumindest ein Abschnitt (13a) der ersten Versorgungsleitung (13) sich in den Speichercontainer (30) erstreckt;
- das erste Behandlungsprogramm eine Trocknungsphase beinhaltet, die zu einer Zeit nach dem Entleeren von Wasser aus dem Speichercontainer (30), oder in jedem Fall in einem Zustand, in dem der Speichercontainer (30) im Wesentlichen leer ist, ausgeführt werden kann;
- der Speichercontainer (30) zumindest einen Lufteinlass (36), der in einer Fluidkommunikation mit dem Abgabezweig des Lüfters (50) steht, und zumindest einen Luftauslass (37), der in einer Fluidkommunikation mit dem Inneren des Bottichs (3) steht, aufweist;
- das Steuersystem (EC) zum Steuern des Lüfters (50) während der Trocknungsphase ausgebildet ist, eine Passage eines Luftflusses in dem Speichercontainer (30), zwischen dem Lufteinlass (36) und dem Luftauslass (37) zu bewirken, in einer solchen Weise, dass der Luftfluss den Abschnitt (13a) der ersten Versorgungsleitung (13) umgibt.

2. Geschirrspülmaschine nach Anspruch 1, wobei das Steuersystem (EC) zum Steuern einer oder mehrerer kurzer Öffnungen der Ventilmittel (17; 17'), die mit der ersten Versorgungsleitung (13) verbunden ist, vor und/oder während der Ausführung der Trocknungsphase bestimmt ist.

3. Geschirrspülmaschine nach Anspruch 1 oder Anspruch 2, wobei:
- zumindest ein solches Behandlungsprogramm beinhaltet:
- eine erste operative Phase, insbesondere eine Waschphase;
- eine zweite operative Phase, insbesondere eine erste Spülphase;
- eine dritte operative Phase, insbesondere eine zweite Spülphase;
- die Maschine (1) eine zweite Versorgungsleitung (33), parallel zu einem von der ersten Versorgungsleitung (13) und dem Abschnitt (13a) der ersten Versorgungsleitung (13), zum Bereitstellen von Wasser von der Wasserhauptversorgung (R) in dem Waschbottich, und Ventilmittel (17'; 34), die operativ mit der zweiten Versorgungsleitung (33) verbunden sind, umfasst;
- das Steuersystem (EC) ausgebildet ist zum:
- Steuern der ersten Mittel (22, 23, 26, 40; 22, 23, 26; 22, 26, 60), zum Abführen von erhitztem Wasser, das in der ersten operativen Phase genutzt wurde, in den Speichercontainer (30);
- Steuern der Ventilmittel (17';34), die mit der zweiten Versorgungsleitung (33) verbunden sind, zum Bereitstellen von Wasser von der Wasserhauptversorgung (R) in dem Bottich (3), um die zweite Betriebsphase durchzuführen, in einer solchen Weise, dass, während der Ausführung der zweiten operativen Phase, erhitztes Wasser, das in den Speichercontainer (30) abgeführt wurde, Wärme an dem Wasser, das in dem Abschnitt (13a) der ersten Versorgungsleitung (13) enthalten ist, unter im Wesentlichen statischen Bedingungen einbringt;
- Steuern der Entwässerungspumpe (24) zum Abführen des Wassers, das in der zweiten operativen Betriebsphase genutzt wurde, aus dem Bottich (3);
- Steuern der Ventilmittel (17, 34; 17'), die mit der ersten Versorgungsleitung (33) verbunden sind, zum Ermöglichen eines Transfers von Wasser, das in dem Abschnitt (13a) der ersten Versorgungsleitung (13) enthalten ist, in den Bottich (3); und
- Steuern der zweiten Mittel (27, 28) für die Zwecke des Entleerens, aus dem Speichercontainer (30), des darin enthaltenen Wassers.

4. Geschirrspülmaschine nach irgendeinem der vorangegangenen Ansprüche, wobei mit dem Sammelbehälter (5) ein Filtersystem verbunden ist, das eine Mehrzahl von Filtern (6, 6a, 7, 8) beinhaltet, die Maschen unterschiedlicher Dimensionen aufweisen, und wobei die ersten Mittel (22, 23, 26, 40; 22, 23, 26; 22, 26, 60) bestimmt sind zum Versorgen des Speichercontainers (30) mit Wasser, das durch einen oder mehrere Filter (6, 6a, 7, 8) der Mehrzahl gefiltert wurde, wobei die ersten Mittel die Waschpumpe (22) beinhalten.

5. Geschirrspülmaschine nach Anspruch 4, wobei die ersten Mittel (22, 23, 26, 40; 22, 23, 26; 22, 26, 60) eine Anordnung für eine wechselnde Versorgung (23, 40) von zumindest zwei Sprinklerelementen (18, 19) des Sprinklersystems umfassen, wobei die Anordnung (23, 40) zumindest einen Auslass (23e), der mit dem Wassereinlass (31) des Speichercontainers (30) verbunden ist, und ein steuerbares Element (40), das in der Lage ist, eine Mehrzahl von wechselnden Positionen anzunehmen, unter denen eine Position des Öffnens des Auslasses (23e) der Anordnung für die wechselnde Versorgung (23, 40) ist, anzunehmen.

6. Geschirrspülmaschine nach irgendeinem der vorangegangenen Ansprüche, wobei die zweiten Mittel eine Pumpe (27), die operativ zwischen den Wasserauslass (32) des Speichercontainers (30) und die Entwässerungsleitung (25) gesetzt ist, beinhalten.

7. Geschirrspülmaschine nach irgendeinem der vorangegangenen Ansprüche, wobei der Abschnitt (13a) der ersten Versorgungsleitung (13) eine im Wesentlichen gewundene oder spiralförmige Ausbildung aufweist.

8. Geschirrspülmaschine nach Anspruch 7, wobei der Abschnitt (13a) der ersten Versorgungsleitung (13) eine Mehrzahl von hohlen modularen Elementen (50, 50') umfasst, die miteinander in einer Fluidkommunikation gekoppelt sind und von denen jedes einen Einlass (52, 51') und einen Auslass (51, 52') aufweist.

9. Geschirrspülmaschine nach irgendeinem der vorangegangenen Ansprüche, wobei die Ventilmittel, die mit der ersten Versorgungsleitung (13) verbunden sind, und die Ventilmittel, die mit der zweiten Versorgungsleitung (33) verbunden sind, in ein und dasselbe Gerät (17') integriert sind, wie etwa ein Gerät, das zwei Ventile beinhaltet.

10. Geschirrspülmaschine nach irgendeinem der vorangegangenen Ansprüche, wobei operativ an zumindest einer von der ersten Versorgungsleitung (13) und der zweiten Versorgungsleitung (33) ein Luftbremsgerät (15; 15') vorgesehen ist.

11. Geschirrspülmaschine nach Anspruch 1, wobei der Speichercontainer (30) in dem Unterbringungsraum (2a) untergebracht ist und sich bevorzugt in einem hinteren Bereich der Basis (2), in einer Position hinter dem Sammelbehälter (5), der Waschpumpe (22) und der Entwässerungspumpe (24), erstreckt.

12. Geschirrspülmaschine nach Anspruch 11, wobei darüber hinaus in dem Unterbringungsraum (2a) ein Wasserenthärtungsgerät (16), das einen Einlass, der in einer Fluidkommunikation mit den Verbindungsmitteln (14) steht, und einen Auslass, der in einer Fluidkommunikation mit der ersten Versorgungsleitung (13) steht, aufweist, untergebracht ist, wobei der Speichercontainer (30) sich in einer Position erstreckt, die ebenfalls hinter dem Wasserenthärtungsgerät (16) liegt.

13. Geschirrspülmaschine nach irgendeinem der vorangegangenen Ansprüche, wobei das Steuersystem (EC) zum Steuern der zweiten Mittel (27) ausgebildet ist, für die Zwecke des Entleerens von Wasser, das in dem Speichercontainer (30) enthalten ist, nach dem Start eines Behandlungsprogramms, das zeitlich dem Programm folgt, während dem Wasser in den Speichercontainer (30) gelassen wurde.

14. Geschirrspülmaschine nach irgendeinem der vorangegangenen Ansprüche, wobei zumindest eines von dem Speichercontainer (30) und dem Abschnitt (13a) der ersten Versorgungsleitung (13) zumindest teilweise in die Basis (2) integriert ist, oder ansonsten zumindest teilweise aus einem einzelnen Stück mit dieser gemacht ist.

15. Verfahren zum Trocknen von Geschirr in einer Haushaltsgeschirrspülmaschine (1), die einen Waschbottich (3), einen Wasserspeichercontainer (30), ein Trocknungssystem (10, 50), und eine Leitung (13), die verbundene Ventilmittel (17; 17') zum Bereitstellen von Wasser von einer Wasserhauptversorgung (R) in dem Bottich (3) aufweist, aufweist,
wobei das Verfahren **dadurch gekennzeichnet** ist, dass es eine Geschirrtrocknungsphase zu einer Zeit nach einem Entleeren des Wassers, das in dem Speichercontainer (30) enthalten ist, umfasst, wobei die Trocknungsphase ein Betätigen eines Lüfters (50) des Trocknungssystems zum Bewirken einer Passage eines erzwungenen Luftflusses in den Speichercontainer (30), zwischen einem entsprechenden Lufteinlass (36), der in einer Fluidkommunikation mit einer Abgabe des Lüfters (50) steht, und einem Luftauslass (36, 37), der in einer Fluidkommunikation mit dem Inneren des Bottichs (3) steht, in einer solchen Weise, dass der Luftfluss zumindest einen Abschnitt (13a) der Leitung (13), der sich in das Innere des Speichercontainers (30) erstreckt, umgibt, wobei vor und/oder während der Ausführung der Trocknungsphase bevorzugt ein oder mehrere kurze Öffnungen der Ventilmittel (17, 17'), die mit der Leitung (13) verbunden sind, ausgeführt werden.

## Revendications

1. Lave-vaisselle, comportant une base (2), une cuve de lavage (3) supportée par la base (2) et un système de commande (EC), dans lequel :
- la base (2) définit un espace de logement (2a) destiné aux composants de fonctionnement du lave-vaisselle (1) ;
- la cuve (3) présente une paroi inférieure (3b) à laquelle est associée un réservoir collecteur (5), lequel fait saillie dans l'espace de logement (2a) ;
- dans l'espace de logement (2a), sont logées une pompe de lavage (22), laquelle est en communication de fluide avec le réservoir collecteur (5) et est pré-agencée pour fournir un système d'aspersion (18, 19) fonctionnel à l'intérieur de la cuve (3), et une pompe de drainage (24) en communication de fluide avec le réservoir collecteur (5) et pré-agencée pour drainer de l'eau en recirculation forcée à partir de la cuve (3) par l'intermédiaire d'un conduit de drainage (25) ;
- le lave-vaisselle (1) comporte des moyens de raccordement (14) configurés pour un raccordement à l'alimentation principale en eau (R) et raccordés par l'intermédiaire d'un premier conduit d'alimentation (13) à un orifice d'entrée d'eau de la cuve (3), des moyens de vannes (17, 34 ; 17') étant associés fonctionnellement au premier conduit d'alimentation (13) ;
- le système de commande (EC) est préconçu pour commander l'exécution d'une pluralité de programmes de traitement de la vaisselle, programmes parmi lesquels au moins un premier programme de traitement qui inclut une pluralité de phases fonctionnelles,
dans lequel le lave-vaisselle (1) comporte, de plus :
un conteneur de stockage (30) comportant un orifice d'entrée d'eau (31) et un orifice de sortie d'eau (32) ;
- des premiers moyens (22, 23, 26, 40 ; 22, 23, 26 ; 22, 26, 60) pour alimenter en eau le conteneur de stockage (30), et des seconds moyens (27, 28) pour vider depuis le conteneur de stockage (30) l'eau qui y était contenue ;
- un ventilateur (50) comportant une branche d'admission, en communication de fluide avec l'intérieur de la cuve (3), et une branche de distribution, **caractérisé en ce que** :
- au moins une partie (13a) du premier conduit d'alimentation (13) s'étend à l'intérieur du conteneur de stockage (30) ;
- le premier programme de traitement comprend une phase de séchage qui peut être exécutée en temps voulu après avoir vidé l'eau du conteneur de stockage (30), ou, dans tous les cas, dans une situation dans laquelle le conteneur de stockage (30) est essentiellement vide ;
- le conteneur de stockage (30) comporte au moins un orifice d'entrée d'air (36), en communication de fluide avec la branche de distribution du ventilateur (50) et au moins un orifice de sortie d'air (37) en communication de fluide avec l'intérieur de la cuve (3) ;
- le système de commande (EC) est configuré de façon à commander le ventilateur (50) pendant la phase de séchage en vue d'entraîner le passage d'un flux d'air dans le conteneur de stockage (30), entre l'orifice d'entrée de l'air (36) et l'orifice de sortie de l'air (37), d'une manière telle que le flux d'air enveloppe ladite partie (13a) du premier conduit d'alimentation (13).

2. Lave-vaisselle selon la revendication 1, dans lequel le système de commande (EC) est préconçu pour commander une ou plusieurs petite(s) ouverture(s) des moyens de vanne (17 ; 17') associés au premier conduit d'alimentation (13) avant et/ou pendant l'exécution de la phase de séchage.

3. Lave-vaisselle selon la revendication 1 ou la revendication 2, dans lequel :
- au moins un dit programme de traitement comporte :
- une première phase fonctionnelle, en particulier une phase de lavage ;
- une deuxième phase fonctionnelle, en particulier une première phase de rinçage ;
une troisième phase fonctionnelle, en particulier une seconde phase de rinçage ;
- le lave-vaisselle (1) comprend un second conduit d'alimentation (33), parallèle à l'un du premier conduit d'alimentation (13) et à ladite partie (13a) du premier conduit d'alimentation (13), pour fournir de l'eau dans la cuve de lavage à partir de l'alimentation principale en eau (R), les moyens de vanne (17' ; 34) étant associés fonctionnellement au second conduit d'alimentation (33) ;
- le système de commande (EC) est configuré pour :
- commander lesdits premiers moyens (22, 23, 26, 40 ; 22, 23, 26 ; 22, 26, 60), en vue d'évacuer dans le conteneur de stockage (30) l'eau chauffée utilisée dans la première phase fonctionnelle ;
- commander les moyens de vanne (17' ; 34) associés au second conduit d'alimentation (33) pour fournir de l'eau dans la cuve à partir de l'alimentation principale en eau (R) afin de mettre en oeuvre la deuxième phase fonctionnelle, d'une manière telle que, pendant la réalisation de la deuxième phase fonctionnelle, l'eau chauffée évacuée dans le conteneur de stockage (30) transfère de la chaleur à l'eau contenue dans ladite partie (13a) du premier conduit d'alimentation (13) dans des conditions essentiellement statiques ;
- commander la pompe de drainage (24) en vue d'évacuer depuis la cuve (3) l'eau utilisée dans la seconde phase fonctionnelle ;
- commander les moyens de vanne (17, 34 ; 17') associés au premier conduit d'alimentation (33) pour permettre un transfert dans la cuve (3) de l'eau contenue dans ladite partie (13a) du premier conduit d'alimentation (13) ; et
- commander lesdits seconds moyens (27, 28) dans le but de vider, à partir du réservoir de stockage (30), l'eau qui y est contenue.

4. Lave-vaisselle selon l'une quelconque des revendications précédentes, dans lequel, associé au réservoir collecteur (5), se trouve un système de filtration incluant une pluralité de filtres (6, 6a, 7, 8) présentant des mailles de différentes dimensions, et dans lequel lesdits premiers moyens (22, 23, 26, 40 ; 22, 23, 26 ; 22, 26, 60) sont préconçus pour alimenter le conteneur de stockage (30) avec de l'eau filtrée par un ou plusieurs filtre(s) (6, 6a, 7, 8) de ladite pluralité, lesdits premiers moyens comportant la pompe de lavage (22).

5. Lave-vaisselle selon la revendication 4, dans lequel lesdits premiers moyens (22, 23, 26, 40 ; 22, 23, 26 ; 22, 26, 60) comprennent un agencement destiné à une alimentation alternative (23, 40) d'au moins deux éléments d'aspersion (18, 19) du système d'aspersion, ledit agencement (23, 40) comportant au moins un orifice de sortie (23e) raccordé à l'orifice d'entrée d'eau (31) du conteneur de stockage (30) et un élément pouvant être commandé (40) capable de prendre une pluralité de positions alternatives, parmi lesquelles une position d'ouverture dudit orifice de sortie (23e) de l'agencement destiné à une alimentation alternative (23, 40).

6. Lave-vaisselle selon l'une quelconque des revendications précédentes, dans lequel lesdits seconds moyens comportent une pompe (27) disposée fonctionnellement entre l'orifice de sortie d'eau (32) du conteneur de stockage (30) et le conduit de drainage (25).

7. Lave-vaisselle selon l'une quelconque des revendications précédentes, dans lequel ladite partie (13a) du premier conduit d'alimentation (13) présente un développement essentiellement tortueux ou configuré en forme de spirale.

8. Lave-vaisselle selon la revendication 7, dans lequel ladite partie (13a) du premier conduit d'alimentation (13) comporte une pluralité d'éléments modulaires creux (50, 50'), couplés les uns aux autres en communication de fluide et comportant, chacun, un orifice d'entrée (52, 51') et un orifice de sortie (51, 52').

9. Lave-vaisselle selon l'une quelconque des revendications précédentes, dans lequel les moyens de vanne associés au premier conduit d'alimentation (13) et les moyens de vanne associés au second conduit d'alimentation (33) sont intégrés dans un seul et même dispositif (17'), tel qu'un dispositif comportant deux vannes.

10. Lave-vaisselle selon l'une quelconque des revendications précédentes, dans lequel il y a un dispositif anti-refoulement (15 ; 15') opérationnel sur au moins l'un du premier conduit d'alimentation (13) et du second conduit d'alimentation (33).

11. Lave-vaisselle selon la revendication 1, dans lequel le conteneur de stockage (30) est logé dans l'espace de logement (2a) et, de préférence, s'étend dans une zone arrière de la base (2), dans une position située derrière le réservoir collecteur (5), la pompe de lavage (22) et la pompe de drainage (24).

12. Lave-vaisselle selon la revendication 11, dans lequel, logé en outre dans l'espace de logement (2a), se trouve un dispositif adoucisseur d'eau (16) comportant un orifice d'entrée, en communication de fluide avec les moyens de raccordement (14), et un orifice de sortie en communication de fluide avec le premier conduit d'alimentation (13), le conteneur de stockage (30) s'étendant dans une position qui se situe également derrière le dispositif adoucisseur d'eau (16).

13. Lave-vaisselle selon l'une quelconque des revendications précédentes, dans lequel le système de commande (EC) est configuré pour commander les seconds moyens (27) dans le but de vider l'eau contenue dans le conteneur de stockage (30) après le démarrage du programme de traitement qui suit dans le temps le programme pendant lequel l'eau a été maintenue dans le conteneur de stockage (30).

14. Lave-vaisselle selon l'une quelconque des revendications précédentes, dans lequel au moins l'un du conteneur de stockage (30) et de ladite partie (13a) du premier conduit d'alimentation (13) est au moins en partie intégrée dans la base (2), ou sinon, en partie du moins, constitué en une seule pièce solidaire avec elle.

15. Procédé pour sécher la vaisselle dans un lave-vaisselle à usage ménager (1), comprenant une cuve de lavage (3), un conteneur de stockage d'eau (30), un système de séchage (10, 50) et un conduit (13) comportant des moyens de vanne associés (17 ; 17') pour fournir de l'eau à la cuve (3) à partir de l'alimentation principale en eau (R),
le procédé étant **caractérisé par** le fait de comporter une phase de séchage de la vaisselle au moment qui suit la vidange de l'eau contenue dans le conteneur de stockage (30), la phase de séchage comprenant d'actionner un ventilateur (50) du système de séchage pour entraîner le passage d'un flux d'air en régime forcé dans le conteneur de stockage (30), entre un orifice d'entrée d'air respectif (36) en communication de fluide avec la distribution du ventilateur (50) et un orifice de sortie d'air (36, 37) en communication de fluide avec l'intérieur de la cuve (3), d'une manière telle que le flux d'air enveloppe au moins une partie (13a) dudit conduit (13) qui s'étend à l'intérieur du conteneur de stockage (30), avant et/ou pendant la réalisation de la phase de séchage qui est exécutée, de préférence, par une ou plusieurs petites ouvertures des moyens de vanne (17, 17') associés au dit conduit (13).
